# EUROPEAN PATENT APPLICATION

(11) **EP 4 521 289 A1**
(43) Date of publication of application: **12.03.2025**
(21) Application number: 24188805.6
(22) Date of filing: 16.07.2024
(51) Int. Cl.: G06F 30/17, G06F 8/71, G06F 16/21, G06F 16/24, G06F 111/02, G06F 111/16, G06F 111/20

(54) **ENGINEERING A VARIANT OF A PHYSICAL SYSTEM FAMILY METHOD AND SYSTEM**

(30) Priority: 08.09.2023 US 202318243798
(71) Applicant: Siemens Industry Software GmbH, 8047 Zürich (CH)
(72) Inventor: Entin, Nikolay, 70619 Stuttgart (DE)
(74) Representative: Siemens Patent Attorneys

(57) **Abstract**

For an improved engineering a variant of a physical system family, a computer-implemented method is suggested including:
• providing engineering information including a model characterizing physical properties of the physical system family in a data storage platform;
• providing lifecycle information including a model artifact characterizing lifecycle properties of the physical system family in a lifecycle database;
• copying the lifecycle information of the physical system family to create variant lifecycle information of the variant in the lifecycle database;
• copying the engineering information of the physical system family to create variant engineering information of the variant in the data storage platform;
• providing the variant model and the variant model artifact to an engineering database; and
• amending the variant model and/or the variant model artifact in the engineering database upon request of a user of the engineering database.

## Description

### Technical field

Embodiments relate to engineering systems, engineering management systems, systems engineering systems, and similar systems, such as computer-aided design (CAD), computer-aided manufacturing (CAM), computer-aided engineering (CAE), and electronic design automation (EDA), that are used to design, integrate, and manage physical systems, such as machines, structures, and other items, including bridges, tunnels, roads, vehicles, and buildings. Further embodiments relate to product lifecycle management (PLM) systems, application lifecycle management (ALM) systems, for example for software, artifact information systems, and similar systems, that are used to create, use, and manage data for products including software and artifacts and other items. The mentioned systems are collectively referred to herein as product systems. Further, the present disclosure is directed, in general, to the interplay of the mentioned engineering systems and the PLM or ALM systems.

### Background

Product systems may include stored content associated with physical systems and product lifecycle information of physical systems. Such content may include engineering information and lifecycle information of the physical system to be engineered.

Currently, there exist product systems and solutions that support engineering a physical system. Such product systems may benefit from improvements.

### Summary

Variously disclosed embodiments include data processing systems and methods that may be used to facilitate engineering a variant of a physical system family, especially improving the traceability of engineering information and/or lifecycle information of a physical system family.

According to a first aspect, a computer-implemented method of engineering a variant of a physical system family is provided. The computer-implemented method includes:
providing engineering information including a model characterizing physical properties of the physical system family in a data storage platform;
providing lifecycle information including a model artifact characterizing lifecycle properties of the physical system family in a lifecycle database,
wherein the model artifact stored in the lifecycle database is linked to the model stored in the data storage platform via a first connector;
copying the lifecycle information of the physical system family to create variant lifecycle information of the variant in the lifecycle database;
creating a second connector linking the model artifact to the variant model artifact included in the variant lifecycle information and stored in the lifecycle database, respectively;
copying the engineering information of the physical system family to create variant engineering information of the variant in the data storage platform;
creating a third connector linking the model to the variant model included in the variant engineering information and stored in the data storage platform, respectively;
creating a fourth connector linking the variant model artifact stored in the lifecycle database to the variant model stored in the data storage platform;
providing the variant model and the variant model artifact to an engineering database; and
amending the variant model and/or the variant model artifact in the engineering database upon request of a user of the engineering database.

According to a second aspect, a computer system may be arranged and configured to execute the steps of the computer-implemented method according to the first aspect.

According to a third aspect, a computer program product may include computer program code that, when executed by the computer system according to the second aspect, causes the computer system to carry out the method according to the first aspect.

According to a fourth aspect, a computer-readable medium may include the computer program product according to the third aspect. By way of example, the described computer-readable medium may be non-transitory and may further be a software component on a storage device.

Herein, the terms "variant" and "physical system family" may, e.g., be understood in the context of product-family engineering which is also known as product-line engineering, and which is a method that creates an underlying architecture of an organization's product platform. Product-family engineering may provide an architecture that is based on commonality as well as planned variabilities. The various product variants may be derived from the basic product family, which may create the opportunity to reuse and differentiate on products in the family. Product-family engineering is conceptually similar to the widespread use of vehicle platforms in the automotive industry. Product-family engineering focuses on the process of engineering new products in such a way that it is possible to reuse product components and apply variability with decreased costs and time. The present invention may support and facilitate product-family engineering and hence may offer several benefits including a higher productivity, a higher quality, a faster time-to-market, and lower labor needs.

### Brief description of the drawings

- Figs. 1&2: depict a functional block diagram of a first example system that facilitates engineering a variant of a physical system family in a product system according to an embodiment.
- Figs. 3-5: depict a functional block diagram of further example systems that facilitate engineering a variant of a physical system family in a product system according to an embodiment, respectively.
- Fig. 6: depicts a flow diagram of an example methodology that facilitates engineering a variant of a physical system family in a product system according to an embodiment.
- Fig. 7: depicts a block diagram of a data processing system according to an embodiment.

### Detailed description

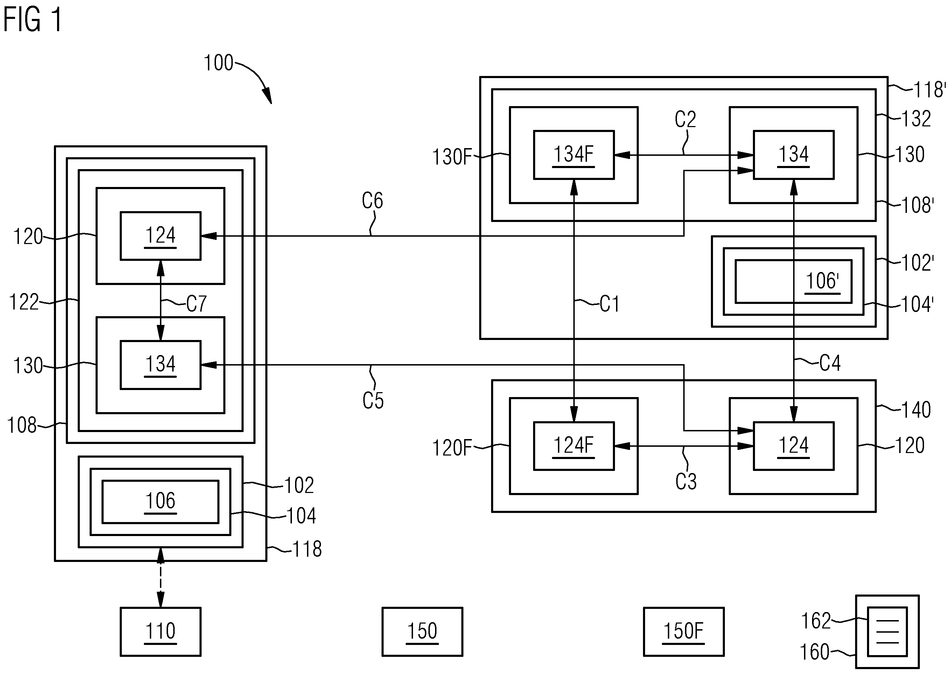

With reference to Fig. 1, a functional block diagram of a first example data processing system 100 is depicted that facilitates engineering a variant 150 of a physical system family 150F, especially improving the traceability of engineering information 120 and/or lifecycle information 130 of physical system family 150F.

The data processing system 100 may, in some examples, include an engineering system 118, a product lifecycle management system 118', and a data storage platform 140. The engineering system 118 and the product lifecycle management system 118' may, by way of example, each include at least one processor 102, 102' that is configured to execute at least one respective application software component 106, 106' from a respective memory 104, 104' accessed by the respective processor 102, 102'. The respective application software component 106, 106' may be configured (i.e., programmed) to cause the respective processor 102, 102' to carry out various acts and functions described herein. For example, the described application software component 106, 106' may include and/or correspond to one or more components of an engineering software application or to a PLM or ALM software application that is configured to generate and store product data in a data store 108, 108' such as a database, respectively. For a better overview, the respective processor 102', the memory 104', and the application software component 106' of the lifecycle system 118' are not shown in Fig. 1. Further, in some examples, the engineering system 118 may include an engineering database 122, and the product lifecycle management system 118' may include a lifecycle database 132.

In some examples, the engineering system 118 may allow for the engineering of a physical system family 150F or a variant 150 of the physical system family 150F by providing corresponding functionalities to a user and by creating, amending, or managing corresponding engineering information 120F relating to the physical system family 150F or variant engineering information 120 relating to the variant 150, respectively. Herein, the engineering information 120F and the variant engineering information 120 may, by way of example, include a model 124F and a variant model 124 characterizing physical properties of the physical system family 150F and of the variant 150, respectively. By way of example, the engineering information 120F, the variant engineering information 120, the model 124F, and/or the variant model 124 may include physical, mechanical, electrical, electronic, hydraulic, thermal, control, electric power and/or process-oriented information of the physical system family 150F and of the variant 150, respectively. In further examples, the engineering information 120F, the variant engineering information 120, the model 124F, and/or the variant model 124 may relate to or include an architecture, e.g., software architecture, of the physical system family 150F and the variant 150, respectively. In some examples, the engineering information 120F and/or the variant engineering information 120 may, e.g., be stored or provided in the data storage platform 140 and/or an engineering database 122 included by the engineering system 118.

The product lifecycle management system 118' may, e.g., allow for the management of lifecycle information 130F of the physical system family 150F or of variant lifecycle information 130 of the variant 150 of the physical system family 150F by providing corresponding functionalities to a user and by creating, amending, or managing corresponding lifecycle information 130F or of variant lifecycle information 130 relating to the physical system family 150F or the variant 150, respectively. Herein, the lifecycle information 130F and the variant lifecycle information 130 may, by way of example, include a model artifact 134F and a variant model artifact 134 characterizing lifecycle properties of the physical system family 150F and of the variant 150, respectively. By way of example, the lifecycle information 130F, the variant lifecycle information 130, the model artifact 134F, and/or the variant model artifact 134 may relate to or include the conception, requirements, uses cases, test cases, issues, design, realization and/or service information of the physical system family 150F and of the variant 150, respectively. In further examples, the lifecycle information 130F, the variant lifecycle information 130, the model artifact 134F, and/or the variant model artifact 134 may, e.g., include data records representing/storing data corresponding to parts, tools, documents, process descriptions, templates, materials, requirements specifications, software products, or software applications relating to the physical system family 150F and of the variant 150, respectively. The lifecycle database 132 may, e.g., be included in a product lifecycle management system 118' that may be different from the engineering system 118. Accordingly, the engineering database 122 may be different from the lifecycle database 132 that are stored in different data stores 108, 108', respectively. In further examples, the lifecycle database 132 may be stored in the same data store 108 as the engineering database 122, and the processor 102 may be used by both the engineering system 118 and the product lifecycle management system 118'. It should be appreciated, that in some examples, the engineering database 122 may be included in an engineering system 118.

In further embodiments, at least one test case relating to the physical system family 150F, the variant 150, or at least certain aspects of it may be used to qualify the physical system 150F or the variant 150 as compliant with certain requirements or specifications or to find issues of the physical system 150F or the variant 150. Such a test case may include or relate, e.g., to test information or test management information, and may further include at least one test criterion against that the physical system 150F or the variant 150, e.g., certain engineering information 120F, 120 and/or lifecycle information 130F, 130 relating to the physical system 150F or the variant 150, may be tested. The result of the execution of the respective test case, e.g., in a very simple example "passed" or "failed", may be stored as a respective test result. Further, by way of example, such a test case may be available for different variants 150 of the physical system family 150F, e.g., standard, premium, luxury variants of a car, low-, middle, or high-power output machines, etc., wherein an issue identified for at least one variants 150 of the physical system 150F using the test case may equally apply to the other variants 150 of the physical system family 150F. Hence, an issue identified for at least one variant 150 of the physical system 150F may easily be checked or verified for the other variants 150 of the physical system 150F.

It should be appreciated that in some examples, the physical system family 150F or the variant 150 may include or be a sensor, an actuator, such as an electric motor, a valve or a robot, an inverter supplying an electric motor, a gear box, a programmable logic controller (PLC), a communication gateway, and/or other parts or components relating to industrial automation products and industrial automation in general. The physical system 150F or the variant 150 may be part of a complex production line or production plant, e.g., a bottle filing machine, conveyor, welding machine, welding robot, etc. In some examples, the physical system 150F or the variant 150 may be a smartphone, smartwatch, handheld, pad, laptop or the like, or a desktop device, e.g., including desktop computers, or other "smart" devices, e.g., smart television sets, fridges, home or industrial automation devices, wherein smart television sets may e.g., be a television set with integrated Internet capabilities or a set-top box for television that offers more advanced computing ability and connectivity than a contemporary basic television set. Further, by way of example, the physical system 150F or the variant 150 may include or be any machine, structure, or other items, including bridges, tunnels, roads, vehicles, and buildings, that may be engineered.

In some examples, the data storage platform 140 has a comparably small latency and a comparably large data storage space allowing for fast data transmission and storage of large amounts of data. In the context of developing or managing engineering information 120 and lifecycle information 130, the data storage platform 140 may make use of storage facilities provided by GitHub, Inc. of San Francisco, CA, USA or by the Apache Subversion repository (often abbreviated SVN) offered by Apache Software Foundation. By way of example, a commit, i.e., a change in source code, may be committed and pushed in a GitHub repository offered by GitHub, Inc. which provides hosting for software development and version control using Git. It offers the distributed version control and source code management (SCM) functionality of Git. Further, a revision, i.e., a change in source code, may be committed and pushed in an Apache Subversion repository which is a software versioning and revision control system distributed as open source under the Apache License. In this context, the data storage platform 140 may offer to store, manage and maintain, e.g., in a persistent way, current and historical versions of files such as source code, web pages, documentation, or generally of engineering information 120 and lifecycle information 130.

Examples of engineering systems that may be adapted to include the some of the engineering features described herein may include Simcenter Amesim, an application produced by Siemens Industry Software NV, of Leuven, Belgium, the NX suite of applications or Solid Edge applications produced by Siemens Industry Software Inc., of Plano, Texas, USA or the Totally Integrated Automation (TIA) Portal, an application produced by Siemens Aktiengesellschaft, of Munich, Germany. Examples of PLM systems that may be adapted to support the engineering features described herein may include the Active Workspace features of Teamcenter, an application produced by Siemens Industry Software Inc., of Plano, Texas, USA. Examples of ALM systems that may be adapted to support the engineering features described herein may include Polarion ALM, an application produced by Siemens Industry Software GmbH, of Zurich, Switzerland. However, it should be appreciated that the systems and methods described herein may be used in other product systems (e.g., PLM, PDM, ALM systems) and/or any other type of system that generates and stores product data in a database. Also, examples of databases that may be used as one or more data stores described herein include database server applications such as Oracle, Microsoft SQL Server, or any other type of data store that is operative to store data records.

By way of example, the data processing system 100 may be cloud-based, internet-based and/or be operated by a provider providing engineering support. The user may be located close to the data processing system 100 or remote to the data processing system 100, e.g., anywhere else, e.g., using a mobile device for connecting to the data processing system 100, e.g., via the internet, wherein the user's device may include an input device 110 and a display device 112. In some examples, the data processing system 100, esp. the engineering system 118 and/or the product lifecycle management system 118', may be installed and run on a user's device, such as a computer, laptop, pad, on-premises computing facility, or the like.

It should be appreciated that it may be difficult and time-consuming to engineer a variant 150 of a physical system family 150F, especially to improve the traceability of engineering information 120 and/or lifecycle information 130 of a physical system family 150F, in complex, production engineering, PLM or ALM environments. For example, amendments may be made to some of the engineering information 120 or to some of the information related to the physical system 150 stored in an engineering database 122 and these amendments may not be taken into account by the corresponding lifecycle information 130 or information related to the physical system 150 stored in a lifecycle database 132. Especially in the context of product-family engineering, managing and persistently storing the associated various variants 150 which may be derived from the basic physical system family 150F may be challenging. However, reusing and consistently managing the engineering information 120 and/or lifecycle information 130 of the various variants 150 is crucial to benefit from product-family engineering. This may, in some examples, be achieved by applying a consistent traceability of engineering information 120 and/or lifecycle information 130 of a physical system family 150F and the corresponding variants 150. Hence, consistence with respect to the engineering information 120 and the lifecycle information 130 of the physical system 150F may be essential to enable a successful engineering process and a successful design or production or manufacture of the physical system family 150F or the respective variant 150. According to other approaches, achieving consistency between the engineering information 120 and the lifecycle information 130 of the physical system 150 may require many consciously and carefully performed manual steps which is an error-prone, slow, and not efficient process.

To enable the enhanced engineering of a variant of a physical system family 150F, especially the improved traceability of engineering information 120F and/or lifecycle information 130F of a physical system family 150F, the described data processing system 100 or, e.g., the engineering system 118, may include at least one input device 110 and at least one display device 112 (such as a display screen). The described processor 102 may be configured to generate a graphical user interface (GUI) 114 through the display device 112. Such a GUI may include GUI elements such as buttons, links, search boxes, lists, text boxes, images, scroll bars) usable by a user to provide inputs through the input device 110 that cause managing artifact information. In the GUI, an engineering user interface (UI) 116 and/or a lifecycle UI 116' may be displayed to a user.

In some examples, the application software component 106 and/or the processor 102 may be configured to provide engineering information 120F including a model 124F characterizing physical properties of the physical system family 150F in a data storage platform 140. Herein the engineering information 120F or the model 124F may be related to physical, mechanical, electrical, electronic, hydraulic, thermal, control, electric power and/or process-oriented information of the physical system family 150F. In some examples, the engineering information 120F or the model 124F may characterize the geometric shape, the surface quality, the stiffness, electric, magnetic and or thermal conductivity of the physical system family 150F. Further, the engineering information 120F or the model 124F may include information on controlling the physical system family 150F or on controlling a process, e.g., a production process, using the physical system family 150F. Generally, the engineering information 120F or the model 124F may directly relate to the physical system family 150F or to one or more components of the physical system family 150F.

In some examples, the application software component 106 and/or the processor 102 may further be configured to provide lifecycle information 130F including a model artifact 134F characterizing lifecycle properties of the physical system family 150F in a lifecycle database 132. Herein, the lifecycle information 130F or the model artifact 134F may, e.g., be related to the conception, requirements, uses cases, issues, design, realization and/or service information of the physical system family 150F. Herein, the conception may relate to information on the physical system 150F that have been created during the ideation, i.e., in an early phase of the creation of the physical system family 150F. The requirements may include or be a physical or functional need that the physical system family 150F aims to satisfy. The requirements may, e.g., describe any necessary (or sometimes desired) function, attribute, capability, characteristic, or quality of the physical system family 150F for it to have value and utility to a customer, organization, internal user, or another stake-holder. By way of example, the requirements may define characteristics that the physical system family 150F shall have or comply with, such as output power, maximum weight, surface quality, compliance with safety regulations, etc. Use cases of the physical system family 150F may include a usage scenario for the physical system family 150F, such as the employment of the physical system family 150F at a certain industrial environment, e.g., a conveyor, paper machine, etc. that may influence or determine certain properties or requirements of the physical system family 150F. Use cases may further include potential scenarios in that the physical system family 150F receives an external request, such as user input or sensor or a control data and responds to it. Hence, such a potential scenario may involve a response function that the physical system family 150F has in reply to given input data. Issues may, by way of example, relate to potential deficiencies or customer complaints with respect to the physical system family 150F or functionalities or components of the physical system family 150F. Hence, such issues may also influence or determine certain properties or requirements of the physical system family 150F. Further, the design may relate to the geometrical, visual or physical appearance of the physical system family 150F. The design may further be or include a plan or specification for the construction of the physical system family 150F or for the implementation of an activity or process relating to the physical system family 150F, or the result of that plan or specification in the form of a prototype, product, or process. Herein, the design may need to satisfy certain goals and constraints, such as the requirements, and may need to take into account aesthetic, functional, economic, or socio-political considerations, and is expected to interact with a certain environment. Examples of designs include architectural blueprints, engineering drawings, business processes, circuit diagrams, and sewing patterns. The realization may relate to the manufacturing or the production of the physical system family 150F and, in some examples, include information on how to manufacture or produce the physical system family 150F and how to achieve the desired characteristics of the physical system family 150F, such as surface quality, so that compliance with the above-mentioned requirements may be achieved. Service information may describe how the physical system family 150F needs to be serviced, e.g., which maintenance intervals apply, and which maintenance activities need to be carried out to allow for reliable and long-lived operation of the physical system family 150F.

Additionally, the lifecycle information 130F or the model artifact 134F may include software documentation, software applications, complex data objects, work items, tasks, change requests, defects or test cases, source code of software products, images, videos, text, webpages, documentation, or any combination thereof, relating to the above-explained lifecycle information 130F of the physical system family 150F. Such lifecycle information 130F may, e.g., be used in the context of (agile) software or hardware development.

In some examples, the model artifact 134F stored in the lifecycle database 132 may be linked to the model 124F stored in the data storage platform 140 via a first connector C1. By way of example, the first connector as well as other connectors mentioned above or below may include a Uniform Resource Locator (URL), a Uniform Resource Identifier (URI) and/or a Requirements Interchange Format (ReqIF) element. Herein, the respective connector may make use or consist of a URI, URL and/or an ReqIF element which links the model artifact 134F stored in the lifecycle database 132 (and included by the lifecycle information 130F of the physical product family 150F) to the model 124F stored in the data storage platform 140 (and included by the engineering information 120F of the physical product family 150F). In some examples, the respective connector links the linked items directly, in other examples, the respective connector links the linked items indirectly, e.g., via at least one additional interlinked item in between the linked items.

Herein, it should be appreciated that, in some examples, the described engineering information 120F, 120 and the described lifecycle information 130F, 130 maybe changed during the engineering process of the physical product family 150F or of the variant 150. In some examples, the lifecycle information 130F, 130 including the respective model artifact 134F, 134 may be implemented by the engineering information 120F, 120 including the respective model 124F, 124. For example, changes to the lifecycle information 130F, 130 may, in many examples, require changes to the engineering information 120F, 120 and vice versa. Hence, there may be an interplay between the engineering information 120F, 120 and the lifecycle information 130F, 130 during the engineering process of the physical product family 150F or of the variant 150. In this context, the first connector C1 may, e.g., allow for easy and convenient data exchange or data processing as well as reliable and unambiguous traceability with respect to the model artifact 134F and the model 124F. Other connectors mentioned above or below may equally allow for easy and convenient data exchange or data processing as well as reliable and unambiguous traceability with respect to the linked items.

In some examples, the application software component 106 and/or the processor 102 may further be configured to copy the lifecycle information 130F of the physical system family 150F to create variant lifecycle information 130 of the variant 150 in the lifecycle database 132. Hence, the variant lifecycle information 130 of the variant 150 may be created in the lifecycle database 132 by creating a copy of the lifecycle information 130F in the lifecycle database 132. Accordingly, the variant lifecycle information 130 and the lifecycle information 130F of the physical system family 150F may have the same content immediately after creating the copy. Herein, the lifecycle information 130F of the physical system family 150F includes the model artifact 134F, whereas the variant lifecycle information 130 of the variant 150 includes the variant model artifact 134. By way of example, the variant lifecycle information 130 may thereafter be amended during the engineering process of the variant 150 so that the variant lifecycle information 130 may have a different content as the lifecycle information 130F of the physical system family 150F.

In further examples, the application software component 106 and/or the processor 102 may further be configured to create a second connector C2 linking the model artifact 134F to the variant model artifact 134 included in the variant lifecycle information 130 and stored in the lifecycle database 132, respectively. By way of example, the second connector C2 may be similar to the first connector C1 explained above and may equally allow for easy and convenient data exchange or data processing as well as reliable and unambiguous traceability with respect to the linked items, i.e., the model artifact 134F to the variant model artifact 134 which are both stored in the lifecycle database 132.

It should be appreciated, that in some examples, the application software component 106 and/or the processor 102 may further be configured to copy the engineering information 120F of the physical system family 150F to create variant engineering information 120 of the variant 150 in the data storage platform 140. Hence, the variant engineering information 120 of the variant 150 may be created in data storage platform 140 by creating a copy of the engineering information 120F in data storage platform 140. Accordingly, the variant engineering information 120 and the engineering information 120F of the physical system family 150F may have the same content immediately after creating the copy. Herein, the engineering information 120F of the physical system family 150F includes the model 124F, whereas the variant engineering information 120 of the variant 150 includes the variant model 124. By way of example, the variant engineering information 120 may thereafter be amended during the engineering process of the variant 150 so that the variant engineering information 120 may have a different content as the lifecycle information 120F of the physical system family 150F.

By way of example, the application software component 106 and/or the processor 102 may further be configured to create a third connector C3 linking the model 124F to the variant model 124 included in the variant engineering information 120 and stored in the data storage platform 140, respectively. In further examples, the application software component 106 and/or the processor 102 may further be configured to create a fourth connector C4 linking the variant model artifact 134 stored in the lifecycle database 132 to the variant model 124 stored in the data storage platform 140. By way of example, the third connector C3 and the fourth connector C4 may be similar to the first connector C1 and the second connector C2 explained above and may equally allow for easy and convenient data exchange or data processing as well as reliable and unambiguous traceability with respect to the linked items, i.e., for the third connector C3 the model 124F to the variant model 124 which are both stored in the data storage platform 140, and for the fourth connector C4 the variant model artifact 134 stored in the lifecycle database 132 to the variant model 124 stored in the data storage platform 140.

In some examples, the application software component 106 and/or the processor 102 may further be configured to provide the variant model 124 and the variant model artifact 134 to an engineering database 122. The provision of the variant model 124 may, e.g., be achieved by importing or copying the variant model 124 from the data storage platform 140 to the engineering database 122. Further, the provision of the variant model artifact 134 may, in some examples, be achieved by importing or copying the variant model artifact 134 from the lifecycle database 132 to the engineering database 122. The provision of the variant model 124 and the variant model artifact 134 to the engineering database 122 may allow the user of the engineering system 118 to engineer the variant 150.

In further examples, the application software component 106 and/or the processor 102 may further be configured to amend the variant model 124 and/or the variant model artifact 134 in the engineering database 122 upon request of a user of the engineering database 122. To engineer the variant 150, the user may, e.g., provide his or her input to the engineering system, for example using the engineering UI 116 and the input device 110. Depending on the user's input, the variant model 124, the variant model artifact 134, or both may be amended. In further examples, the user may also amend engineering information 120 other than the variant model 124 and/or lifecycle information 130 other than the model artifact 134. The amendments made by the user to the engineering information 120 and/or the lifecycle information 130 of the variant 150 may be displayed to the user via the engineering UI 116 so that an interactive engineering process of the variant 150 is supported and enabled.

In further examples, additional connectors may be provided: E.g., a fifth connector C5 may be created linking the variant model artifact 134 stored in the engineering database 122 to the variant model artifact 134 stored in the lifecycle database 132; a sixth connector C6 may be created linking the variant model artifact 134 stored in the engineering database 122 to the variant model 124 stored in data storage platform 140; and a seventh connector C7 may be created linking the variant model 124 to the variant lifecycle information 134 stored in the engineering database 122, respectively. By way of example, the fifth connector C5, the sixth connector C6, and the seventh connector C7 may be similar to the other connectors C1 to C4 explained above and may equally allow for easy and convenient data exchange or data processing as well as reliable and unambiguous traceability with respect to the linked items.

In some examples, the model 120F or the variant model 120 may, e.g., be understood as a representation or conceptual description of the physical system family 150F or of variant 150, wherein the respective model or representation may describe behavioral patterns or characteristic properties of the corresponding physical system. In this context, the model may also be understood as a simplifying image of reality, here the corresponding physical system. One characteristic of such a model may be that the model will, in many examples, not include all attributes that describe the original physical system but only those that appear as relevant to the model's creator or user, esp. in the context of engineering the corresponding physical system. Further, the model artifact 130F or the variant model artifact 130 may be a work item in the context of product or lifecycle management, wherein the model artifact 130F or the variant model artifact 130 may be the correspondence in the lifecycle system of the model 120F or the variant model 120 from the engineering system. Herein, a clever interplay and mutual complement of the engineering system 118 and the lifecycle system 118' benefitting from the described connectors and traceability will allow for reliable and instrumental support of the user during the engineering of the physical system family 150F or the variant 150.

It should further be appreciated that in some examples, the lifecycle system 118' or the lifecycle database 132 may act as an orchestrator for engineering information 120F, 120 in the sense that the lifecycle system 118' or the lifecycle database 132 may configure, coordinate, or manage the handling or traceability of engineering information 120F, 120. By way of example, the lifecycle system 118' or the lifecycle database 132 may ensure a revision control (also known as version control, source control, or source code management) by realizing or using a revision control system (RCS) or some other version control system (VCS) as the data storage platform 140, e.g., using a GitHub repository. Herein, an RCS or VCS may allow one or more users to develop and maintain program code or documents, e.g., engineering information 120F, 120 or lifecycle information 130F, 130. With an RCS or VCS, users may make their own revisions of a document, commit changes, and merge them. While RCS or VCS was originally developed for programs, it may also be useful for text documents or configuration files that are frequently revised, also in the engineering process of a physical system. In some examples, "historic" information which is or was relevant during the engineering process of a physical system and its generations of predecessor and successors may be stored and managed using the lifecycle system 118' or the lifecycle database 132 as an orchestrator or its explained RCS/VCS aspects. In some examples, the orchestrator or RCS/VCS aspects of the lifecycle system 118' or the lifecycle database 132 may enable a long-lived, persistent storage and traceability of all information which is or was relevant during the engineering process of a physical system. This may, in some examples, later turn out to be decisive in the context of finding the root cause if the engineered physical system suffers from deficiencies, as explained in more detail below.

It should further be appreciated that the present invention facilitates embracing all information which is relevant during the engineering process of a physical system family 150F or the variant 150. Hence, all sorts of artifacts belonging to or being related to a model 124 may be interlinked and traced across the various variants 150 of the physical system family 150F. This may particularly be beneficial for enterprise customers which, e.g., may have many different variants 150 of the physical system family 150F. Such customers may, in some examples, face the challenge to find all data related to a certain model 120, e.g., if a deficiency of a certain variant 150 has been discovered and one question may be whether the variants 150 may suffer from the same or a similar deficiency, or who made which contribution when during the engineering of the variant 150. In this context, the suggested method of engineering a variant 150 of a physical system family 150F may considerably contribute to cope with the mentioned challenges and to provide the required interlinked data among others thanks to the described traceability aspects.

In further examples, a respective unique identifier is assigned to the respective model artifact 134F, 134, wherein the respective connector linking the model artifacts 134F, 134 among each other uses the respective unique identifier. Herein, there may be at least one physical system family 150F and at least one variant 150, preferably many variants 150. In some examples, a one-to-one-correspondence may be established between the set of unique identifiers and the set of the model artifacts 134F and variant model artifacts 134. This aspect allows for a reliable and unambiguous linkage and thus unambiguous traceability. In some examples, a respective unique identifier may also be assigned to the models 124F and the variant models 124 of the physical system family 150F and the variant(s) 150, respectively.

By way of example, when a new respective model artifact 134F, 134 is created, the respective unique identifier may be created and assigned to the newly created, respective model artifact 134F, 134. The same approach may be applied with respect to the unique identifiers assigned to the respective model 124F, 124.

By way of example, the application software component 106 and/or the processor 102 may further be configured to copy the lifecycle information 130F of the physical system family 150F and the variant lifecycle information 130 from the lifecycle database 132 to the data storage platform 140, and to link the model artifact 134F and the variant model artifact 134 in the lifecycle 132 to the model artifact 134F and the variant model artifact 134 copied to the data storage platform 140 via respective connectors.

This aspect may contribute to enable a long-lived, persistent storage and traceability of all information which is or was relevant during the engineering process of a physical system. This may, in some examples and as already mentioned above, later turn out to be decisive in the context of finding the root cause if the engineered physical system suffers from deficiencies, as explained in more detail below. In some examples, the lifecycle information 130F and the variant lifecycle information 130 may be imported from the lifecycle database 132 to the data storage platform 140.

It should be , that in some examples, the application software component 106 and/or the processor 102 may further be configured to - for providing the engineering information 130F of the physical system family 150F including the model 124F in a data storage platform 140 and providing the lifecycle information 130F of the physical system family 150F including the model artifact 134F in the lifecycle database 132: create initial requirements 136 which the physical system family 150F needs to satisfy in the lifecycle database 132; create the engineering information 120F of the physical system family 150F including the model 124F in the engineering database 122 upon request of the user of the engineering database 122 after at least some of the initial requirements 136 have been communicated to the user of the engineering database 122; link the initial requirements 136 stored in the lifecycle database 132 to the model 124F stored in the engineering database 122; create the model artifact 134F in the lifecycle database 132 upon request of the user of the engineering database 122; link the initial requirements 136 to the model artifact 134F in the lifecycle database 132; copy the model 124F stored the engineering database 122 to the data storage platform 140; and create the first connector C1 linking the model artifact 134F stored in the lifecycle database 132 to the model 124F stored in the data storage platform 140.

In some examples, the initial requirements 136 may be defined at the start of the engineering process of the physical system family 150F. The initial requirements 136 may, e.g., reflect an intermediate result or the final result of an ideation process to create a new physical system family 150F. Further, the initial requirements 136 may, in some examples, include rather coarse-grained or high-level criteria which the physical system family 150F needs to fulfill. For example, in product development and process optimization, a requirement may generally be understood as a singular documented physical or functional need that a particular design, product or process (here: the physical product family 150F) aims to satisfy. Once provided in the lifecycle database 132, the initial requirements 136 may be provided, e.g., imported, copied, or linked to the engineering database 122 to make the initial requirements 136 available to the user of the engineering database 122. The user of the engineering database 122 may trigger to create engineering information 120F of the physical system family 150F in the engineering database 122 which complies with and satisfies the initial requirements 136. Further, the user of the engineering database 122 may also trigger to create the model artifact 134F in the lifecycle database 132 which gets linked to the initial requirements 136 which are also stored in the lifecycle database 132. For reliable and long-lived traceability, the model 124F stored in the engineering database 122 may be copied or imported to the data storage platform 140, wherein the first connector C1 may be created linking the model artifact 134F stored in the lifecycle database 132 to the model 124F stored in the data storage platform 140.

In some examples, for copying the model 124F into the data storage platform 140, first the dedicated storage may be created or assigned in the data storage platform 140. Further, the model artifact 134F created in the lifecycle database 132 may be stored in the lifecycle database 132 as the lifecycle information 130F which may optionally include other artifacts or information relevant to the lifecycle of the physical system family 150F. In further examples, further connectors may be created to link pairs of the mentioned items as needed. It should be appreciated, that the thus created engineering information 120F and lifecycle information 130F may be used to engineer one or more variants 150 of the physical system family 150F according to other aspects of the present invention.

By way of example, the application software component 106 and/or the processor 102 may further be configured to receive, by the lifecycle database 132, a query Q from the user of the engineering database 122 to provide at least a queried part of a queried model 124Q among one of the models 124F, 124 to the engineering database 122; determine, by the lifecycle database 132, a queried model artifact 134Q among the model artifacts 134F, 134 using the corresponding connectors C, wherein the queried model artifact 134Q is linked to the queried model 124Q; import the at least queried part of the queried model 124Q from the data storage platform 140 to the engineering database 122 using the queried model artifact 134Q and the corresponding connectors C; and amend the at least queried part of the queried model 124Q in the engineering database 122 upon request of the user of the engineering database 122.

The user may, in some examples, query at least a part of a queried model 124Q in order to continue engineering and existing variants 150 or start engineering a new variant 150 of the physical system family 150F. To this end, the user may, e.g., use at least a part of the available and interconnected models 124F, 124 of the physical system family 150F as a starting point. In order to provide the engineering database 122 and the user with the information required for the engineering of the existing variant 150 or of a new variant 150, the lifecycle database 132 determines the corresponding, queried model artifact 134Q among the model artifacts 134F, 134 of the physical system family 150F which is linked and corresponds to the queried model 124Q, wherein the established traceability provided by corresponding connectors may be leveraged. The identified, queried model artifact 134Q and the corresponding connectors may be used to import at least the queried part of the queried model 124Q from the data storage platform 140 to the engineering database 122. The at least queried parts of the queried model 124Q may be amended in the engineering database 124 upon request of the user of the engineering database 124, e.g., if the user interactively engineers the existing variant 150 or the new variant 150 with the at least queried parts of the queried model 124Q as the starting point.

It should be appreciated, that these aspects may, e.g., be used if a new user starts (contributing to) engineering an existing variant 150 or a new variant 150 in the engineering database 122. To this end, the engineering database 122 may need to be prepared accordingly. In some examples, if the user desires to engineer a new variant 150, the amended model 124 may be stored as a new model 124 of the new variant 150, wherein corresponding new lifecycle information 130 may be created in the lifecycle database 132 and interconnected accordingly using corresponding connectors. In further examples, such newly created lifecycle information 130 including a new variant model artifact 134 may be imported from the lifecycle database 132 or the data storage platform 140 to the engineering database 122. Upon request of the user of the engineering database 122 the new variant model artifact 134 may be amended in the course of the engineering process of the new variant 150.

In further examples, the application software component 106 and/or the processor 102 may further be configured to update the respective lifecycle information 130 including the respective model artifact 134 stored in the lifecycle database 132 and/or stored in the data storage platform 140 upon amendment of the respective lifecycle information 130 including the respective model artifact 134 stored in the engineering database 122 by the user of the engineering database 122 using the respective connectors C; and update the respective engineering information 120 including the respective model 124 stored in the data storage platform 140 upon amendment of the respective engineering information 120 including the respective model 124 stored in the engineering database 122 by the user of the engineering database 122 using the respective connectors.

It should be appreciated, that the described update mechanism may also contribute to enable a long-lived, persistent storage and traceability of all information which is or was relevant during the engineering process of a physical system. Herein, the update mechanism benefits from the consistent traceability which may be achieved thanks to the corresponding connectors. Thanks to the update mechanism, amendments made by the user to one aspect of the variant 150 (or correspondingly the physical system family 150F) may be propagated to the lifecycle database 132 and/or the data storage platform 140 so that all the information relevant to the engineering of the variant 150 (or correspondingly the physical system family 150F) are up to date. In some examples, the various versions or all the information relevant to the engineering of the variant 150 (or correspondingly the physical system family 150F) obtained by a sequence of amendments made by the user may be stored in the data storage platform 140 as corresponding revisions. Herein, the mentioned revisions may, e.g., be interconnected for traceability reasons and may be particularly beneficial to find out when, how and/or by who the potential mistake has been made in the engineering process of the variant 150 (or correspondingly the physical system family 150F) in case safety issues or deficiencies occur.

By way of example, the application software component 106 and/or the processor 102 may further be configured to receive information on a deficiency D of a deficient variant 150D of the physical system family 150F; determine the deficient model 124D and/or the deficient model artifact 134D of the deficient variant 150D that is/are related to the received information on the deficiency; determine affected model(s) 124A among the model(s) 124, 124F and affected model artifact(s) 134A) among the model artifacts 134, 134F linked via the corresponding connectors to the deficient model 124D and/or the deficient model artifact 134D that is/are related to the received information on the deficiency D; and output the affected model(s) 124A and/or the affected model artifact(s) 134A.

Herein, a deficiency D may, by way of example, be a fault, malfunction or problem of the deficient variant 150D or of the manufacturing process of the deficient variant 150D. Information on the deficiency may, in some examples, be obtained during the engineering process, e.g., as feedback from a test engineer during testing, during the manufacturing process, or from customers or after sales in form of customer complaints or issues with respect to the deficient variant 150D.

It should be appreciated, that in many examples, the management of deficiencies is of great importance, e.g., for root cause analyses, to determine the impact of the deficiency or simply since the deficiency may be relevant to safety standards that need to be complied with by safety-critical systems to reach certification. As an example, such a standard may be ISO 26262, titled "Road vehicles - Functional safety", which is an international standard for functional safety of electrical and/or electronic systems that are installed in serial production road vehicles (excluding mopeds). Another example of such a standard may be IEC 61508, titled "Functional Safety of Electrical/Electronic/Programmable Electronic Safety-related Systems (E/E/PE, or E/E/PES)". By way of example, a test case included in the lifecycle information 130F, 130 may include mandatory features described in the respective standard, and the engineering information 120F, 120 or other lifecycle information 130F, 130 may be tested against the mentioned mandatory features that are included in the test case. It should further be appreciated that the present invention makes a significant contribution to ensuring long-lived, persistent storage and traceability of all information which is or was relevant during the engineering process of a physical system which is crucial in this context.

The received information on the deficiency D may be used to identify the corresponding deficient model 124D and/or the deficient model artifact 134D of the deficient variant 150D. In some examples, first the deficient variant 150D, e.g., among the plurality of variants 150 of the physical system family 150F, may need to be determined using the received information on the deficiency D. In some examples, the determination of the deficient model 124D and/or the deficient model artifact 134D may be done by the engineering system 118, and in other examples this determination may be done by the lifecycle system 118'. In the next step, affected models 124A and/or affected model artifacts 134A may be determined which are linked to the deficient model 124D and/or the deficient model artifact 134D, wherein the affected models 124A and/or the affected model artifacts 134A are related to the received information on the deficiency D. Hence, in some examples, a check may be done whether the received information on the deficiency D is related or relevant to the models 124 and/or the model artifacts 134 which are linked to the deficient model 124D and/or the deficient model artifact 134D.

In further examples, criteria may be provided or developed to map the received information on the deficiency D on certain aspects of the deficient model 124D and/or the deficient model artifact 134D. These criteria may be applied to identify the affected models 124A and/or the affected model artifacts 134A among the models 124 and/or the model artifacts 134 which the linked to the deficient model 124D and/or the deficient model artifact 134D.

In some examples, the mentioned criteria may indicate dependencies or functional relations between different types of deficiencies D and corresponding aspects of the deficient model 124D and/or the deficient model artifact 134D, such as an electronic malfunction being related to the electronic layout or the electronic components of the deficient variant 150D; damages of the surface of the housing being related to the manufacturing or transport process of a produced, deficient variant 150D; an operational malfunction being related to the operating software of the deficient variant 150D; an overheating problem being related to a fan or a heat sink of the deficient variant 150D; etc., wherein the mentioned criteria may take into account the deficient model 124D and/or the deficient model artifact 134D. Finally, the determined affected models 124A and/or affected model artifacts 134A may be output, e.g., to the user of the engineering database 122 using the engineering UI 116.

In further examples, the above-mentioned aspects of the affected models 124A and/or the affected model artifacts 134A, which may, in some examples, be relevant to the above-mentioned criteria, may be highlighted when output, e.g., to the user of the engineering database 122 using the engineering UI 116.

It should also be appreciated, that in some examples, the application software component 106 and/or the processor 102 may further be configured to amend the deficient model 124D and/or the deficient model artifact 134D intended to remedy the deficiency D upon request of the user of the engineering database 122; and propagate the amendment of the deficient model 124D and/or of the deficient model artifact 134D to the affected model(s) 124A and/or the affected model artifact(s) 134A using the corresponding connectors.

In some examples, the information to remedy the deficiency D may be provided by the user, optionally supported by plausibility or consistence checks which may be provided by the engineering system 118 and/or the lifecycle system 118' and which may be applied to the deficient model 124D and/or the deficient model artifact 134D. Upon receipt of the user's request, the deficient model 124D and/or the deficient model artifact 134D may be amended, wherein the amendment may be propagated to the affected model(s) 124A and/or the affected model artifact(s) 134A. The mentioned propagation may, in some examples, be done by applying the same amendment to the affected model(s) 124A and/or the affected model artifact(s) 134A. In other examples, the mentioned propagation may be done by suggesting to the user to apply the same amendment to the affected model(s) 124A and/or the affected model artifact(s) 134A. The suggestion may, by way of example, be done by displaying a UI element to the user in the engineering UI 116, wherein the UI element includes the option to accept and take over the suggested amendment and the option to reject the suggested amendment. In some examples, the mentioned UI element may additionally display the suggested amendment and optionally the affected model(s) 124A and/or the affected model artifact(s) 134A.

The suggested propagation of the amendment may contribute to minimize the impact of the deficiency D and remedy or correct the deficiency D as fast and as convenient as possible.

By way of example, the application software component 106 and/or the processor 102 may further be configured to - for providing the engineering information 120 in a data storage platform 140 - create the model 124 in the engineering database 122 upon request of the user of the engineering database 122; import the model artifact 134 from the lifecycle database 132 to the engineering database 122; and create a further connector C8 linking the model 124 to the model artifact 134 stored in the engineering database 122, respectively.

The described creation of the model 124 in the engineering database 122 and of the further connector C8 may, in some examples, be done at the start of the engineering process of the variant 150 and further contribute to enable a long-lived, persistent storage and traceability of all information which is or was relevant during the engineering process of a physical system.

By way of example, at least two of the engineering database 122, the lifecycle database 132, and the data storage platform 140 are located remotely from each other and/or are separated from each other by at least one firewall.

In some examples, the lifecycle database 132 and the lifecycle system 118' may be cloud-based so that the user may only remotely access the lifecycle database 132 and the lifecycle system 118'. In further examples, the data storage platform 140 may cloud-based, wherein the servers or memory of the data storage platform 140 may be situated at a different location as, e.g., the lifecycle database 132 and the lifecycle system 118'. The engineering database 122 and the engineering system 118 may, in some examples, be operated on the user's end device, e.g., the user's laptop, or in the vicinity of the user, e.g., or an on-premises solution of the user's company.

In further examples, the data storage platform 140 on the one hand and the lifecycle database 132 which is included by the lifecycle system 118' on the other hand may be separated from each other via a firewall. By way of example, the corresponding connectors linking items stored in the lifecycle database 132 to items stored in the data storage platform 140 are configured such that data communication relating to the linked items through the firewall is enabled. In further examples, the corresponding connectors linking items stored in the engineering database 122 items stored either in the data storage platform 140 or in the lifecycle database 132 are configured such that data communication relating to the linked items through the firewall is enabled.

By way of example, the application software component 106 and/or the processor 102 may further be configured to model, simulate, analyze, produce and/or operate the variant 150 of the physical system family 150F using the variant engineering information 120, the variant lifecycle information 130, and the corresponding connectors.

By way of example, the modelling, the simulation and/or the analysis of the variant 150 may, by way of example, include considering the time-varying behavior of the dynamical, variant 150. The variant 150 may, e.g., be described or include a description using by ordinary differential equations or partial differential equations. A simulation or calculation run may solve the state-equation system to find the behavior of the state variables of the variant 150 over a specified period of time. The equation(s) may be solved through numerical integration methods to produce the transient behavior of the state variables of the variant 150. A simulation of a dynamic variant 150 may predict the values of model-system state variables, as they are determined by the past state values. This relationship may be described or characterized by the model 124 of the variant 150.

In further examples, the respective variant 150 may be produced by any suitably arranged manufacturing system. In further, the respective variant 150 may be operated, in some examples, by a machine or a plant including the respective device belonging to the respective variant 150.

In further examples, the application software component 106 and/or the processor 102 may further be configured to stop producing and/or operating the affected variant 150A of the physical system family 150F.

To be able to stop the production of the affected variant 150A, the engineering system 118 may, e.g., be communicatively connected to a manufacturing system producing the affected variant 150A. Further, to stop operating the affected variant 150A, the engineering system 118 may, by way of example, be communicatively connected to the respective device belonging to the affected variant 150A or to a machine or a plant including the affected variant 150A. Hence, the engineering system 118 may communicate corresponding messages or commands to the manufacturing system, the respective device, or the machine or plant, respectively.

In further examples, the application software component 106 and/or the processor 102 may further be configured to stop producing and/or operating the deficient variant 150D of the physical system family 150F, wherein approaches may apply which are similar to the approaches explained and/or with respect to the affected variant 150A.

Further, a computer-readable medium 160 that may include a computer program product 162 is depicted in Fig. 1, wherein the computer program product 162 may be encoded with executable instructions, that when executed, cause the computer system 100 to carry out the described method.

Further, it should be appreciated that the mentioned user may actually be a group of users so that the described activities done by the user may actually be done by different users.

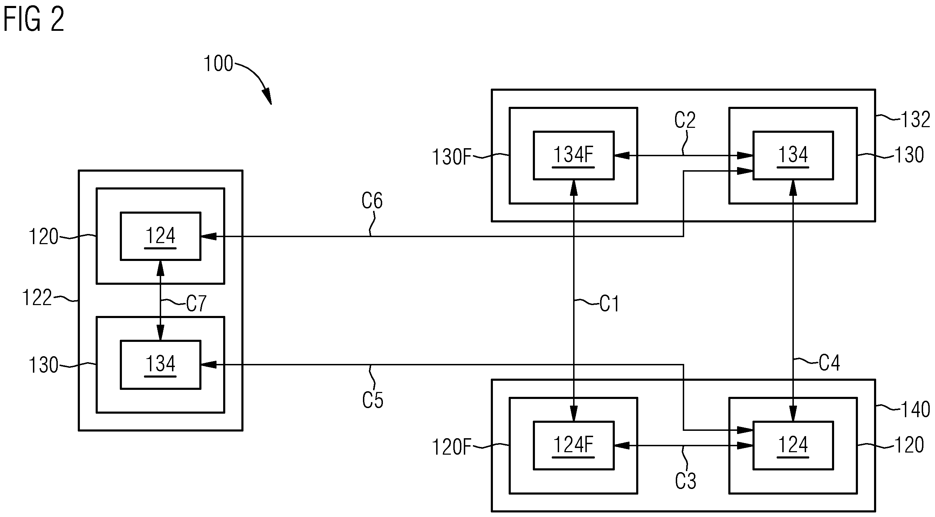

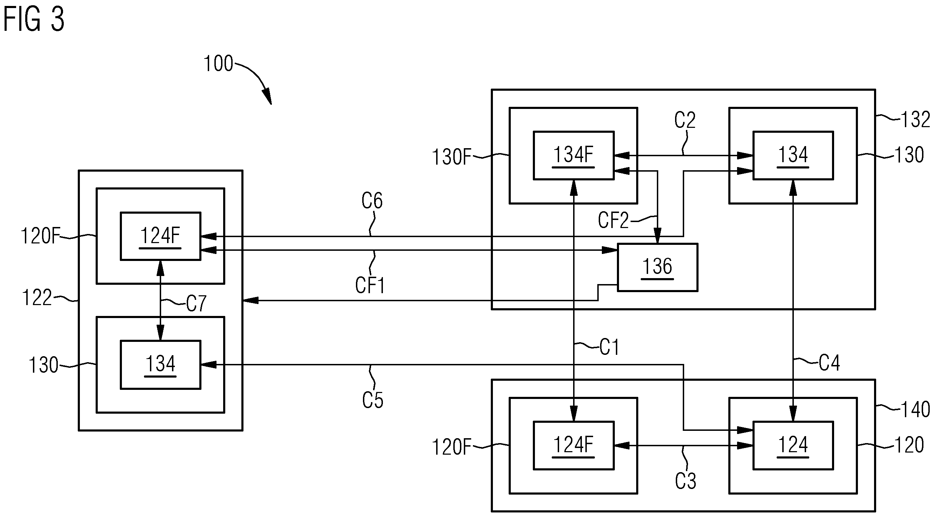

Referring now to Fig. 2, another functional block diagram of the first example data processing system 100 is depicted that facilitates engineering a variant 150 of a physical system family 150F, especially improving the traceability of engineering information 120 and/or lifecycle information 130 of physical system family 150F. For a better overview, several items illustrated in Fig. 1 are omitted in Fig. 2. A similar approach is applied in Figs. 3 to 5 in which several items illustrated in Fig. 1 are also omitted, wherein it should be understood that the respective data processing system 100 may include these items.

Referring now to Fig. 3, a functional block diagram of a second example data processing system 100 is depicted that facilitates engineering a variant 150 of a physical system family 150F, especially improving the traceability of engineering information 120 and/or lifecycle information 130 of physical system family 150F.

According to the second example, initial requirements 136 may be created which the physical system family 150F needs to satisfy in the lifecycle database 132, e.g., upon request of the user. The initial requirements 136 may be communicated to the user of the engineering database 122, e.g., by importing them to the engineering database 122 and/or by a displaying the initial requirements 136 to the user of the engineering database 122, e.g., via the engineering UI 116. The engineering information 120F of the physical system family 150F including the model 124F may be created in the engineering database 122 upon request of the user of the engineering database 122. The initial requirements 136 stored in the lifecycle database 132 may be linked to the model 124F stored in the engineering database 122 via a connector CF1. The model artifact 134F may be created in the lifecycle database 132, e.g., upon request of the user of the engineering database 122. The initial requirements 136 may be linked to the model artifact 134F in the lifecycle database 132 via a connector CF2. The model 124F stored the engineering database 122 may be copied to the data storage platform 140. And the first connector C1 may be created linking the model artifact 134F stored in the lifecycle database 132 to the model 124F stored in the data storage platform 140.

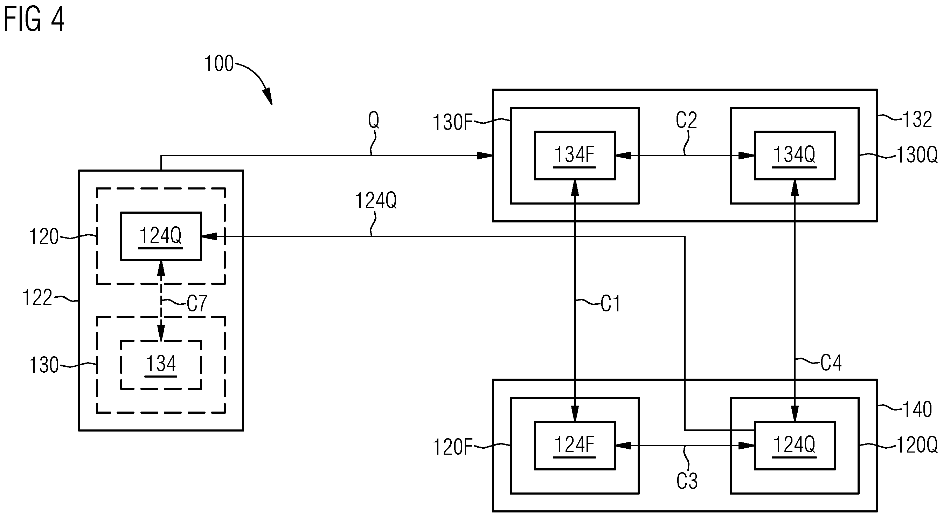

Referring now to Fig. 4, a functional block diagram of a third example data processing system 100 is depicted that facilitates engineering a variant 150 of a physical system family 150F, especially improving the traceability of engineering information 120 and/or lifecycle information 130 of physical system family 150F.

According to the third example, the lifecycle database 132 may receive a query Q from the user of the engineering database 122 to provide at least a queried part of a queried model 124Q among one of the models 124F, 124 to the engineering database 122. The lifecycle database 132 may determine a queried model artifact 134Q among the model artifacts 134F, 134 using the corresponding connectors C, wherein the queried model artifact 134Q is linked to the queried model 124Q. In the present example, e.g., the connectors C1, C3, and C4 may be used to this end. The at least queried part of the queried model 124Q may be imported from the data storage platform 140 to the engineering database 122 using the queried model artifact 134Q and the corresponding connectors C. Upon request of the user of the engineering database 122, the at least queried part of the queried model 124Q may be amended in the engineering database 122.

It should be appreciated, that this aspect may, e.g., be used if a user starts (contributing to) engineering an existing variant 150 or a new variant 150 in the engineering database 122. Herein, the existing variant 150 or the new variant 150 may include the corresponding engineering information 120 and lifecycle information 130 including the model artifact 134, as illustrated with the dashed lines in Fig. 4.

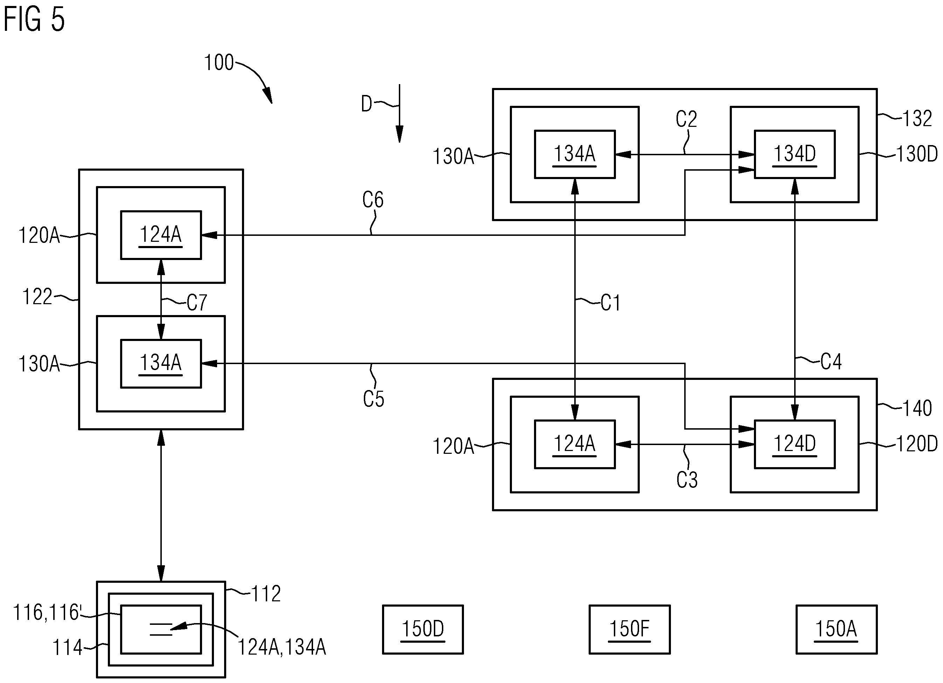

Referring now to Fig. 5, a functional block diagram of a fourth example data processing system 100 is depicted that facilitates engineering a variant 150 of a physical system family 150F, especially improving the traceability of engineering information 120 and/or lifecycle information 130 of physical system family 150F.

According to the fourth example, information on a deficiency D of a deficient variant 150D of the physical system family 150F may be received, e.g., by the engineering system 118 or the lifecycle system 118', by an after-sales mgmt. system or a manufacturing system. The deficient model 124D and/or the deficient model artifact 134D of the deficient variant 150D that is/are related to the received information on the deficiency may be determined. In some examples, the determination of the deficient model 124D and/or the deficient model artifact 134D may be done by the engineering system 118, and in other examples this determination may be done by the lifecycle system 118'. Herein, as explained above, in further examples, criteria may be provided or developed to map the received information on the deficiency D on certain aspects of the deficient model 124D and/or the deficient model artifact 134D. These criteria may be applied to identify the affected models 124A and/or the affected model artifacts 134A among the models 124 and/or the model artifacts 134 which the linked to the deficient model 124D and/or the deficient model artifact 134D. The affected model(s) 124A among the model(s) 124, 124F and affected model artifact(s) 134A) among the model artifacts 134, 134F may be determined, wherein the affected model(s) 124A and the affected model artifact(s) 134A are linked via the corresponding connectors to the deficient model 124D and/or the deficient model artifact 134D and are further related to the received information on the deficiency D. The affected model(s) 124A and/or the affected model artifact(s) 134A may be output, e.g., to the user of the engineering database 122 using the engineering UI 116.

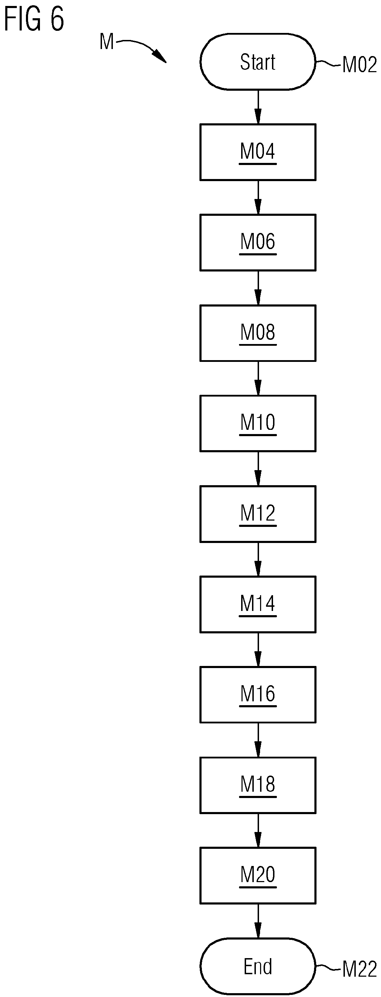

Referring now to Fig. 6, a flow diagram of an example methodology that facilitates engineering a variant of a physical system family, especially improving the traceability of engineering information and/or lifecycle information of a physical system family, is depicted. The methodology M may start at M02 and may include several acts carried out through operation of at least one processor.

These acts may include an act M04 of providing engineering information including a model characterizing physical properties of the physical system family in a data storage platform; an act M06 of providing lifecycle information including a model artifact characterizing lifecycle properties of the physical system family in a lifecycle database, wherein the model artifact stored in the lifecycle database is linked to the model stored in the data storage platform via a first connector; an act M08 of copying the lifecycle information of the physical system family to create variant lifecycle information of the variant in the lifecycle database; an act M10 of creating a second connector linking the model artifact to the variant model artifact included in the variant lifecycle information and stored in the lifecycle database, respectively; an act M12 of copying the engineering information of the physical system family to create variant engineering information of the variant in the data storage platform; an act M14 of creating a third connector linking the model to the variant model included in the variant engineering information and stored in the data storage platform, respectively; an act M16 of creating a fourth connector linking the variant model artifact stored in the lifecycle database to the variant model stored in the data storage platform; an act M18 of providing the variant model and the variant model artifact to an engineering database; and an act M20 of amending the variant model and/or the variant model artifact in the engineering database upon request of a user of the engineering database. At M22 the methodology may end.

It should further be appreciated that the methodology M may include other acts and features discussed previously with respect to the computer-implemented method of engineering a variant of a physical system family, especially improving the traceability of engineering information and/or lifecycle information of a physical system family.

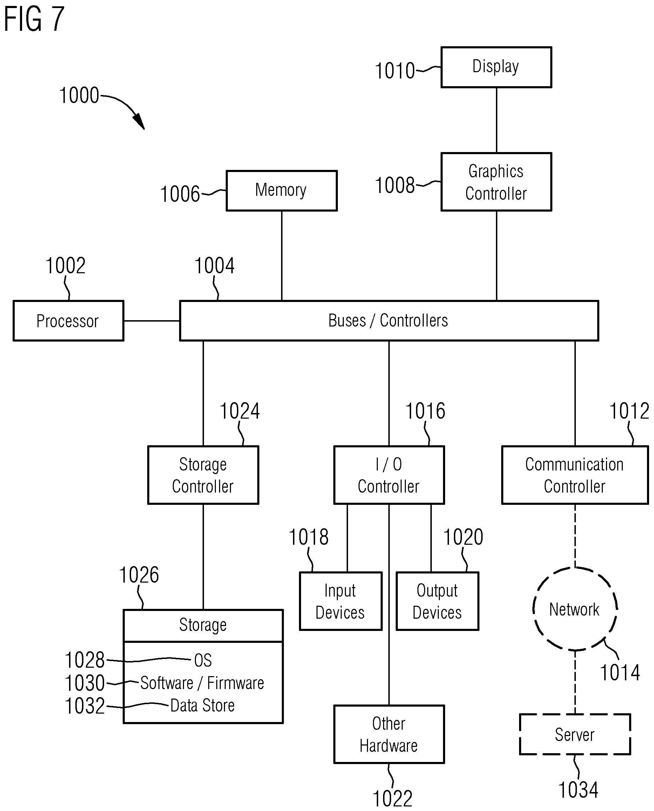

Referring now to Fig.7, depicts a block diagram of a data processing system 1000 (also referred to as a computer system) in that an embodiment may be implemented, for example, as a portion of a product system, and/or other system operatively configured by software or otherwise to perform the processes as described herein. The data processing system 1000 may include, for example, the computer or IT system or data processing system 100 mentioned above. The data processing system depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input and display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various busses may include one or more storage controllers 1024 (e.g., SATA). A storage controller may be connected to a storage device 1026 such as one or more storage drives and/or any associated removable media, that may be any suitable non-transitory machine usable or machine-readable storage medium. Examples include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, that is retrievable by a processor.

The communication controllers 1012 may be connected to the network 1014 (not a part of data processing system 1000), that may be any public or private data processing system network or combination of networks, as known to those of skill in the art, including the Internet. Data processing system 1000 may communicate over the network 1014 with one or more other data processing systems such as a server 1034 (also not part of the data processing system 1000). However, an alternative data processing system may correspond to a plurality of data processing systems implemented as part of a distributed system in that processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system, or part thereof that controls at least one operation, whether such a device is implemented in hardware, firmware, software, or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be included in a client device that communicates with the server (and/or a virtual machine executing on the server) through a wired or wireless network (that may include the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, that may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "include", "includes", "comprise" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to comprise, be comprised within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, that is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

## Claims

1. Computer-implemented method of engineering a variant of a physical system family, the method including:
providing engineering information including a model characterizing physical properties of the physical system family in a data storage platform;
providing lifecycle information including a model artifact characterizing lifecycle properties of the physical system family in a lifecycle database,
wherein the model artifact stored in the lifecycle database is linked to the model stored in the data storage platform via a first connector;
copying the lifecycle information of the physical system family to create variant lifecycle information of the variant in the lifecycle database;
creating a second connector linking the model artifact to the variant model artifact included in the variant lifecycle information and stored in the lifecycle database, respectively;
copying the engineering information of the physical system family to create variant engineering information of the variant in the data storage platform;
creating a third connector linking the model to the variant model included in the variant engineering information and stored in the data storage platform, respectively;
creating a fourth connector linking the variant model artifact stored in the lifecycle database to the variant model stored in the data storage platform;
providing the variant model and the variant model artifact to an engineering database; and
amending the variant model and/or the variant model artifact in the engineering database upon request of a user of the engineering database.

2. Computer-implemented method according to claim 1,
wherein a respective unique identifier is assigned to the respective model artifact, and
wherein the respective connector linking the model artifacts among each other uses the respective unique identifier.

3. Computer-implemented method according to any of the preceding claims, further including:
• copying the lifecycle information of the physical system family and the variant lifecycle information from the lifecycle database to the data storage platform; and
• linking the model artifact and the variant model artifact in the lifecycle database to the model artifact and the variant model artifact copied to the data storage platform via respective connectors.

4. Computer-implemented method according to any of the preceding claims, wherein providing the engineering information of the physical system family including the model in a data storage platform and providing the lifecycle information of the physical system family including the model artifact in the lifecycle database includes:
• creating initial requirements which the physical system family needs to satisfy in the lifecycle database;
• creating the engineering information of the physical system family including the model in the engineering database upon request of the user of the engineering database after at least some of the initial requirements have been communicated to the user of the engineering database;
• linking the initial requirements stored in the lifecycle database to the model stored in the engineering database;
• creating the model artifact in the lifecycle database upon request of the user of the engineering database;
• linking the initial requirements to the model artifact in the lifecycle database;
• copying the model stored the engineering database to the data storage platform; and
• creating the first connector linking the model artifact stored in the lifecycle database to the model stored in the data storage platform.

5. Computer-implemented method according to any of the preceding claims, further including:
• receiving, by the lifecycle database, a query from the user of the engineering database to provide at least a queried part of a queried model among one of the models to the engineering database;
• determining, by the lifecycle database, a queried model artifact among the model artifacts using the corresponding connectors, wherein the queried model artifact is linked to the queried model;
• importing the at least queried part of the queried model from the data storage platform to the engineering database using the queried model artifact and the corresponding connectors; and
• amending the at least queried part of the queried model in the engineering database upon request of the user of the engineering database.

6. Computer-implemented method according to any of the preceding claims, further including:
• updating the respective lifecycle information including the respective model artifact stored in the lifecycle database and/or stored in the data storage platform upon amendment of the respective lifecycle information including the respective model artifact stored in the engineering database by the user of the engineering database using the respective connectors; and
• updating the respective engineering information including the respective model stored in the data storage platform upon amendment of the respective engineering information including the respective model stored in the engineering database by the user of the engineering database using the respective connectors.

7. Computer-implemented method according to any of the preceding claims, further including:
receiving information on a deficiency of a deficient variant of the physical system family;
determining the deficient model and/or the deficient model artifact of the deficient variant that is/are related to the received information on the deficiency;
determining affected model(s) among the models and affected model artifact(s) among the model artifacts linked via the corresponding connectors to the deficient model and/or the deficient model artifact that is/are related to the received information on the deficiency; and
outputting the affected model(s) and/or the affected model artifact (s) .

8. Computer-implemented method according to any of the preceding claims, further including:
• amending the deficient model and/or the deficient model artifact intended to remedy the deficiency upon request of the user of the engineering database; and
• propagating the amendment of the deficient model and/or of the deficient model artifact to the affected model(s) and/or the affected model artifact(s) using the corresponding connectors.

9. Computer-implemented method according to any of the preceding claims, wherein providing the engineering information in a data storage platform includes:
creating the model in the engineering database upon request of the user of the engineering database;
importing the model artifact from the lifecycle database to the engineering database; and
creating a further connector linking the model to the model artifact stored in the engineering database, respectively.

10. Computer-implemented method according to any of the preceding claims,
wherein at least two of the engineering database, the lifecycle database, and the data storage platform are located remotely from each other and/or separated from each other by at least one firewall.

11. Computer-implemented method according to any of the preceding claims, further including:
engineering, modeling, simulating, analyzing, producing and/or operating the variant of the physical system family using the variant engineering information, the variant lifecycle information, and the corresponding connectors.

12. Computer-implemented method according to claims 7 or 8 and further according to claim 11, further including:
stopping producing and/or operating the affected variant of the physical system family.

13. Computer system arranged and configured to execute the steps of the computer-implemented method according to any one of the preceding claims.

14. A computer program product, including computer program code which, when executed by a computer system, cause the computer system to carry out the method of one of the claims 1 to 12.

15. A computer-readable medium including a computer program product including computer program code which, when executed by a computer system, cause the computer system to carry out the method of one of the claims 1 to 12.
